# EUROPEAN PATENT APPLICATION

(11) **EP 4 578 674 A1**
(43) Date of publication of application: **02.07.2025**
(21) Application number: 24197208.2
(22) Date of filing: 29.08.2024
(51) Int. Cl.: B60H 1/00, B60H 1/32

(54) **THERMAL MANAGEMENT SYSTEM AND CONTROL METHOD THEREOF, AND VEHICLE**

(30) Priority: 28.12.2023 CN 202311843250
(71) Applicant: Xiaomi EV Technology Co., Ltd., 100176 Beijing (CN)
(72) Inventor: XU, Liang, Beijing, 100176 (CN); LIU, Wanjun, Beijing, 100176 (CN)
(74) Representative: Stöckeler, Ferdinand

(57) **Abstract**

A thermal management system includes: an electric-drive heat exchange system including a first loop (101); a heat-pump heat exchange system including a second loop (201), where the first loop (101) can exchange heat with the second loop (201); and a battery heat exchange system including a third loop (301), where the second loop (201) can exchange heat with the third loop (301).

## Description

### TECHNICAL FIELD

The invention relates to the technical field of thermal management of vehicles, in particular to a thermal management system and a control method thereof, and a vehicle.

### BACKGROUND OF THE INVENTION

In winter, batteries of vehicles, for example, new energy vehicles, need to be heated to safeguard their usability as the ambient temperature is low. In the related art, the batteries are generally heated by a heat pump system, which has a low heating speed and cannot satisfy the demand of customers for rapid heating.

### SUMMARY OF THE INVENTION

An objective of the invention is to provide a thermal management system and a control method thereof, and a vehicle. According to the thermal management system, a battery is heated by superposing heat from three heat sources of an electric-drive locked-rotor, a heat pump system and the heater, heat is released, the battery is heated rapidly, and a heating rate is improved.

In order to achieve the above objective, a first aspect of the invention provides a thermal management system. The thermal management system is applied to a vehicle and includes:
an electric-drive heat exchange system including a first loop (or referred to as an electric-drive heat exchange loop), and a first pump and an electric-drive heat exchanger that are arranged in the first loop;
a heat-pump heat exchange system including a second loop (or referred to as a heat-pump heat exchange loop), and a compressor, an indirect condenser, an electronic expansion valve and a cooler that are sequentially arranged in the second loop, where the first loop is connected to the cooler, the first loop being configured to exchange heat with the second loop; and
a battery heat exchange system including a third loop (or referred to as a battery heat exchange loop), and a heater and a battery heat exchanger that are arranged in the third loop, where
the third loop is connected to the indirect condenser, the second loop is configured to exchange heat with the third loop.

Optionally, the third loop includes an outer circulation loop and an inner circulation loop which are in disconnectable communication;
the battery heat exchanger is arranged in the inner circulation loop and configured for heat exchange of a battery; and
the heater and the indirect condenser are arranged in the outer circulation loop.

Optionally, the battery heat exchange system includes a second pump arranged in the inner circulation loop and a third pump arranged in the outer circulation loop.

Optionally, the battery heat exchange system further includes a proportional three-way valve;
the third loop includes a liquid inlet passage connected to an outlet of the heater and an inlet of the battery heat exchanger, a liquid return passage connected to an outlet of the battery heat exchanger and an inlet of the heater, and a first passage and a second passage connected to the liquid inlet passage and the liquid return passage respectively and arranged in parallel;
the proportional three-way valve is arranged in a liquid inlet passage between the heater and the second pump, one end of the first passage is in communication with the liquid inlet passage through the proportional three-way valve, and the other end of the first passage is connected between the third pump and the battery heat exchanger;
one end of the second passage is connected to a liquid inlet passage between the proportional three-way valve and the second pump, and the other end of the second passage is connected to a liquid return passage between the third pump and the battery heat exchanger;
the heater, the proportional three-way valve, the first passage, the third pump and the indirect condenser form the outer circulation loop; and
the second pump, the battery heat exchanger and the second passage form the inner circulation loop.

Optionally, the thermal management system further includes an air heater core connected to the third loop, an indoor condenser connected to the second loop and corresponding to the air heater core, and a fan, where
the fan is configured to blows air towards the air heater core and the indoor condenser to heat a passenger compartment.

Optionally, the first loop is provided with a first temperature sensor configured to measure an outlet temperature of the electric-drive heat exchanger; and/or
the third loop is provided with a second temperature sensor configured to measure an outlet temperature of the heater; and/or
the third loop is provided with a third temperature sensor configured to measure an inlet temperature of the battery heat exchanger.

Optionally, the electric-drive heat exchanger is configured to perform differential proportional integral (PI) control according to an actual temperature and a target temperature of the first loop; and/or
the compressor is configured to perform differential PI control according to an actual pressure and a target pressure of the second loop, and the electronic expansion valve is configured to perform differential PI control according to an actual degree of supercooling and a target degree of supercooling of the second loop; and/or
the heater is configured to perform differential PI control according to an actual temperature and a target temperature of the third loop.

Optionally, the thermal management system further includes a multi-way valve connected to the first loop and the third loop separately, where
the multi-way valve has a first mode and a second mode;
in the first mode, the multi-way valve is disconnected from the first loop and the third loop, the electric-drive heat exchanger is disconnected from the cooler, and the heater is disconnected from the battery heat exchanger; and
in the second mode, the multi-way valve is in communication with the first loop and the third loop separately, the electric-drive heat exchanger is in communication with the cooler, and the heater is in communication with the battery heat exchanger.

A second aspect of the invention provides a control method of a thermal management system, based on the above thermal management system. The control method includes:
determining a heating requirement, where the heating requirement includes heating a battery, heating a passenger compartment, and simultaneously heating the battery and the passenger compartment;
activating the electric-drive heat exchange system and the battery heat exchange system according to an ambient temperature and the heating requirement; and
activating the heat-pump heat exchange system according to a working state of the electric-drive heat exchange system.

Optionally, activating the electric-drive heat exchange system and the battery heat exchange system according to an ambient temperature and the heating requirement further includes:
activating an inner circulation loop and an outer circulation loop of the battery heat exchange system separately; and
activating the heat-pump heat exchange system in response to determining that a temperature of the electric-drive heat exchange system is greater than a first preset temperature.

Optionally, activating the electric-drive heat exchange system and the battery heat exchange system according to an ambient temperature and the heating requirement further includes:
activating the heat-pump heat exchange system in response to determining that a temperature of the outer circulation loop of the battery heat exchange system reaches a second preset temperature.

Optionally, in response to determining that the temperature of the outer circulation loop of the battery heat exchange system reaches a third preset temperature, the outer circulation loop and the inner circulation loop are in communication, the battery is heated by the battery heat exchanger, and
the third preset temperature is greater than or equal to the second preset temperature.

Optionally, activating the electric-drive heat exchange system and the battery heat exchange system according to an ambient temperature and the heating requirement further includes:
activating an outer circulation loop of the battery heat exchange system; and
activating a fan and an air heater core, and heating the passenger compartment.

Optionally, activating the electric-drive heat exchange system and the battery heat exchange system according to an ambient temperature and the heating requirement further includes:
activating the heat-pump heat exchange system in response to determining that a temperature of the electric-drive heat exchange system is greater than a first preset temperature.

A third aspect of the invention provides a vehicle. The vehicle includes the thermal management system provided in the first aspect of the invention or the control method of a thermal management system provided in the second aspect of the invention.

According to the above technical solution, that is, the thermal management system in the invention including the electric-drive heat exchange system, the heat-pump heat exchange system and the battery heat exchange system, the first loop can exchange heat with the second loop by means of the cooler, and the second loop can exchange heat with the third loop by means of the indirect condenser. Heat generated by an electric-drive locked-rotor is collected by the electric-drive heat exchanger and then exchanged into a refrigerant of the heat pump-heat exchange loop by means of the cooler through operation of the first pump. The heat-pump system superimposes the heat generated by the electric drive and heat generated by compressor power consumption by means of a refrigeration cycle (the compressor compresses a low-pressure and low-temperature gaseous refrigerant to form a high-temperature and high-pressure gaseous refrigerant, and exchanges heat into the third loop in the indirect condenser, and the refrigerant in the second loop becomes a high-temperature and high-pressure liquid refrigerant, is throttled by the electronic expansion valve of the cooler to become a low-temperature and low-pressure gas-liquid two-phase refrigerant, absorbs heat in the cooler to become a low-temperature and low-pressure gaseous refrigerant and returns to the compressor), and then exchanges the heat into cooling liquid of the third loop by means of the indirect condenser, the cooling liquid is heated again by the heater of the third loop, and the battery is heated by the battery heat exchanger. According to the thermal management system in the invention, a battery is heated by superposing heat from three heat sources of an electric-drive locked-rotor, a heat pump system and the heater, heat is released, the battery is heated rapidly, and a heating rate is improved.

Other features and advantages of the invention will be described in detail in the following detailed description.

### BRIEF DESCRIPTION OF DRAWINGS

The drawings, which are used for providing further understanding of the invention and constitute part of the description, together with the following detailed description, serve to explain the invention instead of limiting the same. In the figures:
Fig. 1 is a structural diagram of a thermal management system according to some examples of the invention;
Fig. 2 is a structural diagram of a thermal management system according to some examples of the invention, where a first loop, an inner circulation loop, and an outer circulation loop are activated;
Fig. 3 is a structural diagram of a thermal management system according to some examples of the invention, where a heat-pump heat exchange system, a first loop, an inner circulation loop, and an outer circulation loop are activated;
Fig. 4 is a structural diagram of a thermal management system according to some examples of the invention, where a heat-pump heat exchange system, a first loop, an inner circulation loop, and an outer circulation loop are activated, and the inner circulation loop and the outer circulation loop are in communication;
Fig. 5 is a structural diagram of a thermal management system according to some examples of the invention, where a heat-pump heat exchange system, a first loop, and a battery heat exchange system are activated and operate stably;
Fig. 6 is a structural diagram of a thermal management system according to some examples of the invention, where a first loop, a fan, an inner circulation loop, and an outer circulation loop are activated;
Fig. 7 is a structural diagram of a thermal management system according to some examples of the invention, where a heat-pump heat exchange system, a first loop, a fan, an inner circulation loop, and an outer circulation loop are activated;
Fig. 8 is a structural diagram of a thermal management system according to some examples of the invention, where a heat-pump heat exchange system, a first loop, a fan, an inner circulation loop, and an outer circulation loop are activated, and the inner circulation loop and the outer circulation loop are in communication;
Fig. 9 is a structural diagram of a thermal management system according to some examples of the invention, where a heat-pump heat exchange system, a first loop, a fan and a battery heat exchange system are activated and operate stably;
Fig. 10 is a structural diagram of a thermal management system according to some examples of the invention, where a first loop, a fan, and an outer circulation loop are activated;
Fig. 11 is a structural diagram of a thermal management system according to some examples of the invention, where a heat-pump heat exchange system, a first loop, a fan, and an outer circulation loop are activated;
Fig. 12 is a structural diagram of a thermal management system according to some examples of the invention, where a heat-pump heat exchange system, a first loop, a fan and an outer circulation loop are activated, and compressor power is ramped up;
Fig. 13 is a structural diagram of a thermal management system according to some examples of the invention, where a heat-pump heat exchange system, a first loop, a fan and an outer circulation loop are activated and operate stably; and
Fig. 14 is a flowchart of a control method of a thermal management system according to some examples of the invention.

### DETAILED DESCRIPTION OF THE INVENTION

Specific embodiments of the invention are described in detail below in combination with the drawings. It should be understood that the specific embodiments described here is merely used to describe and explain the invention and are not intended to limit the invention.

In the disclosure, the terms "first", "second", "third", "fourth", etc. are used in the disclosure to distinguish one element from another, without order or importance, unless otherwise stated. Furthermore, when the following description relates to the drawings, the same reference numerals in different drawings indicate the same or similar elements unless otherwise explained. The above definitions are for explanation and description of the invention only and should not be construed as limitations on the invention.

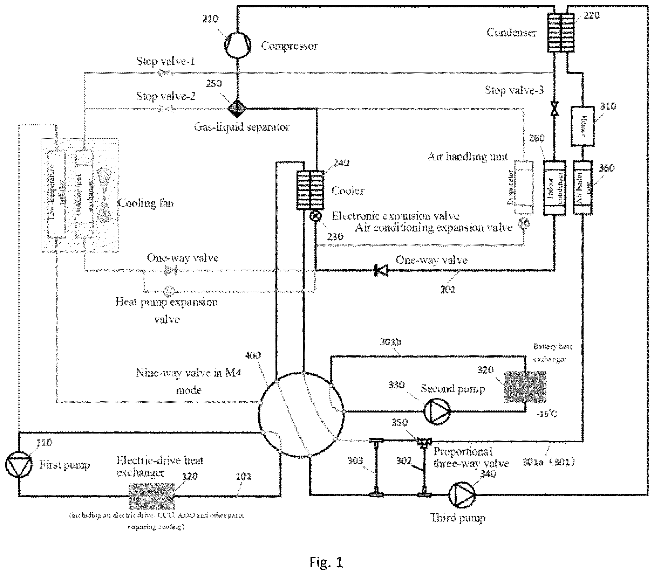

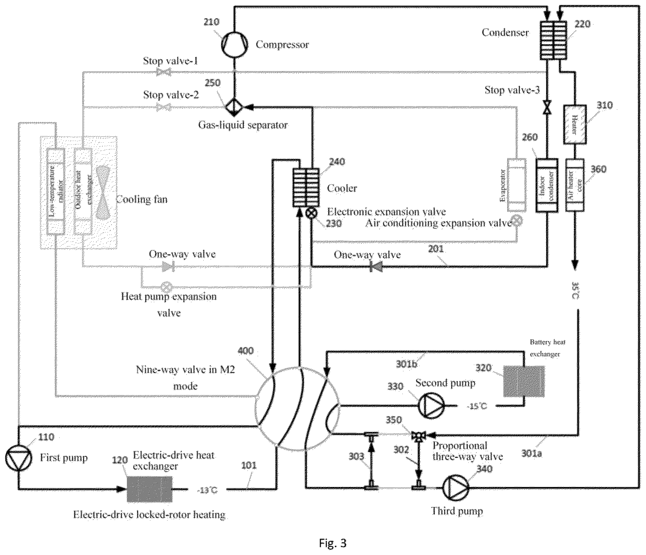

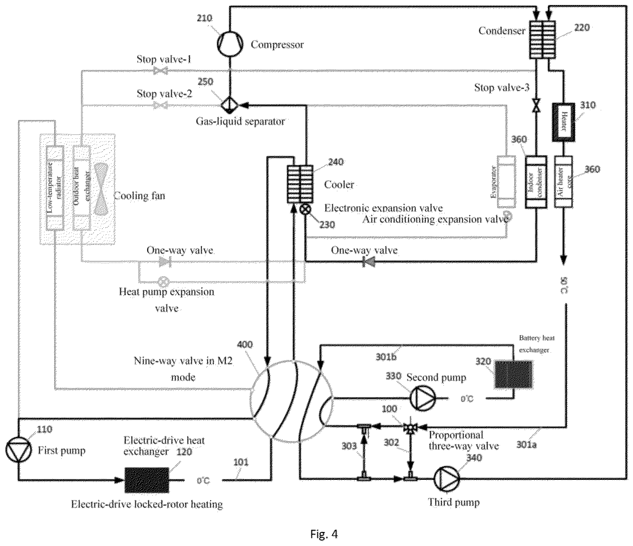

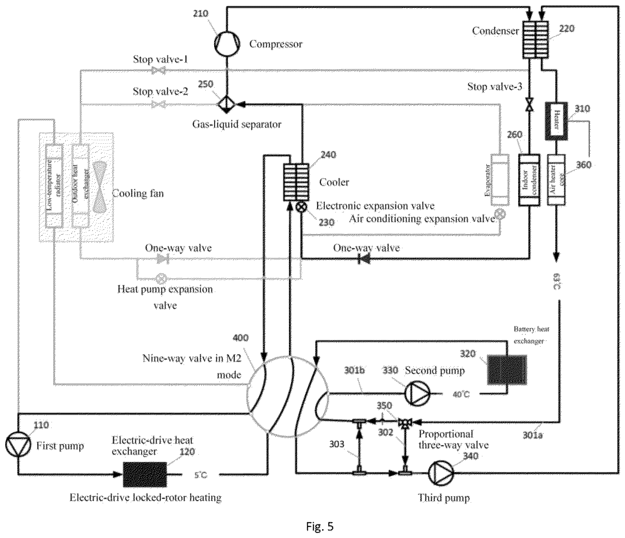

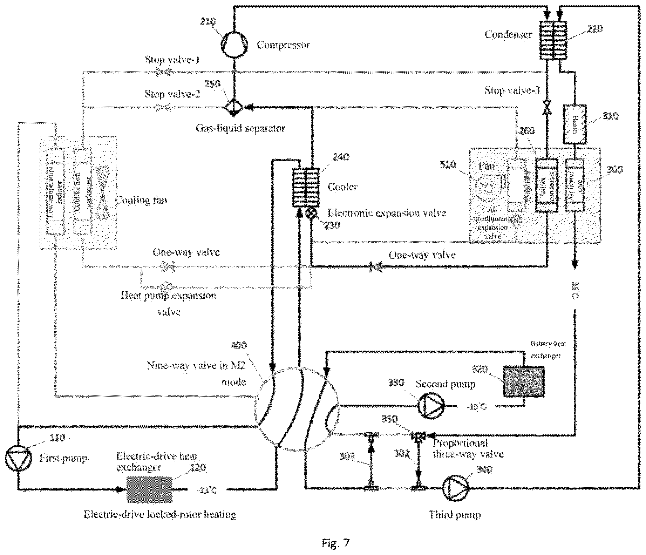

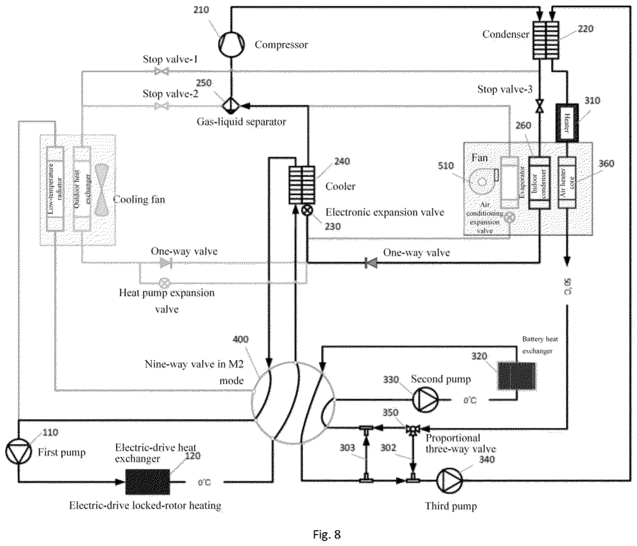

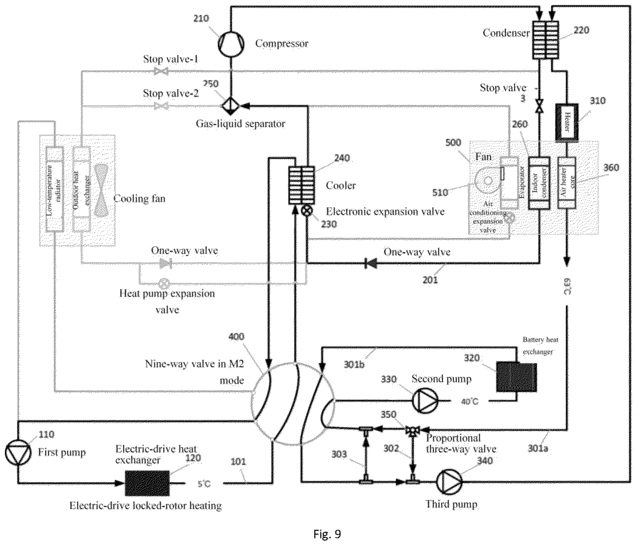

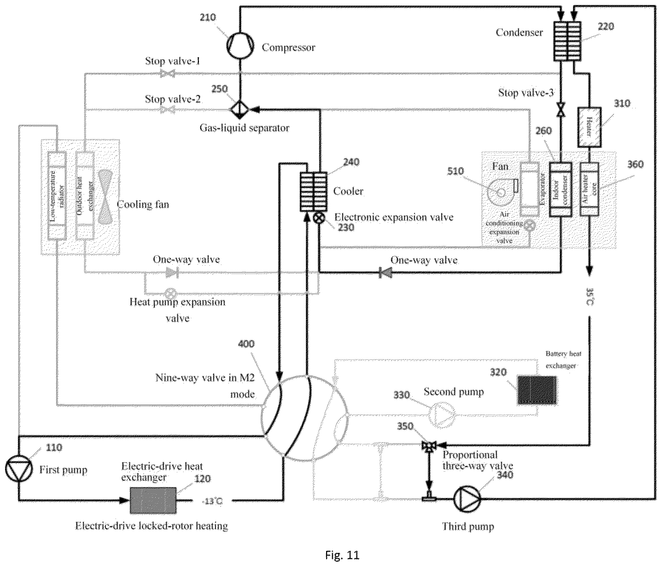

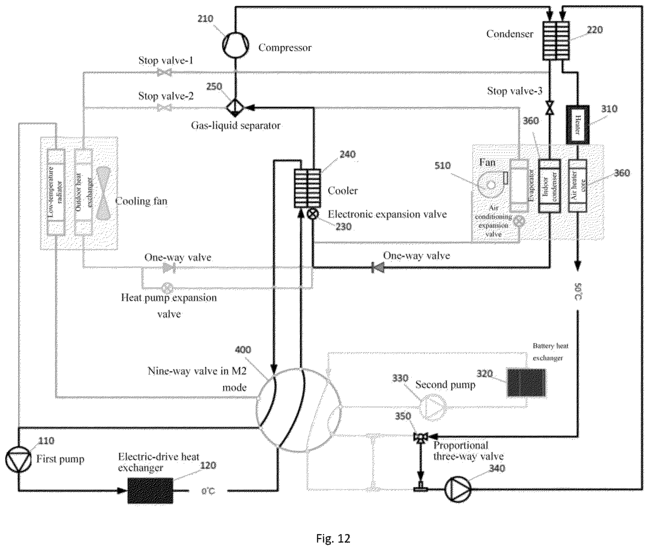

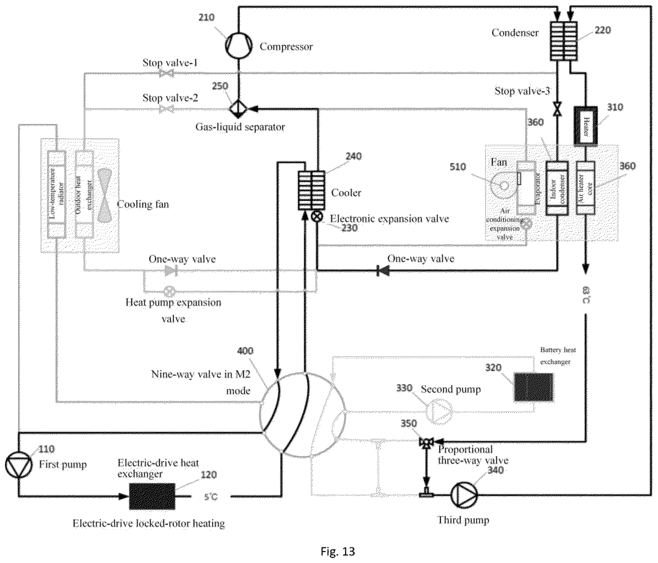

As shown in Figs. 1-13, in order to achieve the above objective, an example of the invention provides a thermal management system. The thermal management system is applied to a vehicle and includes an electric-drive heat exchange system, a heat-pump heat exchange system, and a battery heat exchange system. The electric-drive heat exchange system includes a first loop 101 (or referred to as an electric-drive heat exchange loop), and a first pump 110 and an electric-drive heat exchanger 120 that are arranged in the first loop 101. The heat-pump heat exchange system includes a second loop 201 (or referred to as a heat-pump heat exchange loop), and a compressor 210, an indirect condenser 220, an electronic expansion valve 230 and a cooler 240 that are sequentially arranged in the second loop 201. The first loop 101 is connected to the cooler 240, such that the first loop 101 can exchange heat with the second loop 201. The battery heat exchange system includes a third loop 301 (or referred to as a battery heat exchange loop), and a heater 310 and a battery heat exchanger 320 that are arranged in the third loop 301. The third loop 301 is connected to the indirect condenser 220, such that the second loop 201 can exchange heat with the third loop 301.

According to the above technical solution, that is, the thermal management system in the invention including the electric-drive heat exchange system, the heat-pump heat exchange system and the battery heat exchange system, the first loop 101 can exchange heat with the second loop 201 by means of the cooler 240, and the second loop 201 can exchange heat with the third loop 301 by means of the indirect condenser 220. Heat generated by electric-drive locked-rotor (also known as motor stalling) is collected by the electric-drive heat exchanger 120 and then exchanged into a refrigerant of the heat pump-heat exchange loop 201 by means of the cooler 240 through operation of the first pump 110. The heat-pump system superimposes the heat generated by the electric drive and heat generated by compressor 210 power consumption by means of a refrigeration cycle (the compressor 210 compresses a low-pressure and low-temperature gaseous refrigerant to form a high-temperature and high-pressure gaseous refrigerant, and exchanges heat into the third loop 301 in the indirect condenser 220, and the refrigerant in the second loop 201 becomes a high-temperature and high-pressure liquid refrigerant, is throttled by the electronic expansion valve 230 of the cooler 240 to become a low-temperature and low-pressure gas-liquid two-phase refrigerant, absorbs heat in the cooler 240 to become a low-temperature and low-pressure gaseous refrigerant and returns to the compressor 210), and then exchanges the heat into cooling liquid of the third loop 301 by means of the indirect condenser 220, the cooling liquid is heated again by the heater 310 of the third loop 301, and the battery is heated by the battery heat exchanger 320. According to the thermal management system in the invention, a battery is heated by superposing heat from three heat sources of electric-drive locked-rotor, a heat pump system and the heater 310, heat is released, the battery is heated rapidly, and a heating rate is improved.

It can be understood that each of loops of the electric-drive heat exchange system, the heat-pump heat exchange system and the battery heat exchange system in the invention may further include parts necessary for loop circulation, such as a switch valve for switching on and off a loop, a temperature sensor for measuring a temperature of a loop, etc., all of which may refer to related known technologies, and are not described one by one here. Moreover, the heater 310 may be of any suitable structural form, including but not limited to an electric heater. The electric-drive heat exchanger 120 is configured to exchange heat with the heat generated by the locked-rotor of an electric drive system, and may be a heat exchanger for exchanging heat with a cooling lubrication loop of the electric drive system, or may be other structures capable of exchanging the heat generated by locked-rotor of the electric drive system. For specific structures, reference may be made to related known technologies.

It should be noted that the thermal management system can satisfy heating of a battery, heating of a passenger compartment of a vehicle, and simultaneous heating of a battery and a passenger compartment. Heating requirements of a specific process are described in detail below.

In some examples, the heat-pump heat exchange system further includes a gas-liquid separator 250. The gas-liquid separator 250 is arranged on the second loop 201 between the compressor 210 and the cooler 240 for separating a gas phase from a liquid phase in the second loop 201. The gas-liquid separator 250 may be of any suitable type, and is not repeated here.

The thermal management system of the invention includes an electric-drive heat exchange system. The electric-drive heat exchange system exchanges the heat generated by electric-drive locked-rotor through the electric-drive heat exchanger 120 to the cooler 240 of the heat-pump heat exchange system. The thermal management system further includes the heat-pump heat exchange system. The heat-pump heat exchange system includes a compressor 210, an indirect condenser 220, an electronic expansion valve 230 and a cooler 240. Compression and flow of a refrigerant in the second loop 201 is used, and the heat is transferred to the third loop 301 of the battery heat exchange system by means of the indirect condenser 220. The thermal management system further includes the battery heat exchange system. The heat generated by the electric-drive locked-rotor and the heat generated by the heat-pump heat exchange system are heated by the heater 310 and then used for heating the battery, so as to implement three-source heating to improve heating efficiency.

It should be noted that reference may be made for the refrigerant in the second loop 201 to a known refrigerant of a related heat pump system. The reference is a conventional technology, and is not repeated here. Moreover, liquid in the first loop 101 and the third loop 301 includes, but is not limited to, water, and other liquids capable of implement heat exchange. Reference may be made to the design in the related art, and is not repeated here.

The third loop 301 may be configured in any suitable manner. In some examples, the third loop 301 includes an outer circulation loop 301a and an inner circulation loop 301b that are in disconnectable communication. The battery heat exchanger 320 is arranged in the inner circulation loop 301b and configured for heat exchange of a battery. The heater 310 and the indirect condenser 220 are arranged in the outer circulation loop 301a. The outer circulation loop 301a may be a preheating loop, and the inner circulation loop 301b may be used only for the flow of liquid in the battery heat exchanger 320. When an ambient temperature is low, both circulation loops can circulate separately, with the indirect condenser 220 and the heater 310 designed in the respective circulation loop. When the heater 310 in the circulation loop is activated, the outer circulation loop 301a may be heated to a preset temperature first. When a temperature of the outer circulation loop 301a reaches a target temperature, the outer circulation loop 301a may be in communication with the inner circulation loop 301b. In this case, the liquid in the outer circulation loop 301a may at least partially enter the inner circulation loop 301b, thus increasing a temperature of the liquid in the inner circulation loop 301b, to heat the battery through the battery heat exchanger 320.

In order to achieve circulation of the liquid in the outer circulation loop 301a and the inner circulation loop 301b, guarantee liquid flowing and improve heat exchange efficiency to a certain extent, in some examples, the battery heat exchange system includes a second pump 330 arranged in the inner circulation loop 301b and a third pump 340 arranged in the outer circulation loop 301a.

The inner circulation loop 301b may be provided with the second pump 330, that is, the battery heat exchanger 320 and the second pump 330 are connected in series in an air circulation loop, thus generating a single circulation system. The outer circulation loop 301a may be provided with the third pump 340, that is, the indirect condenser 220, the heater 310 and the third pump 340 are connected in series in the outer circulation loop 301a, thus generating a single circulation system.

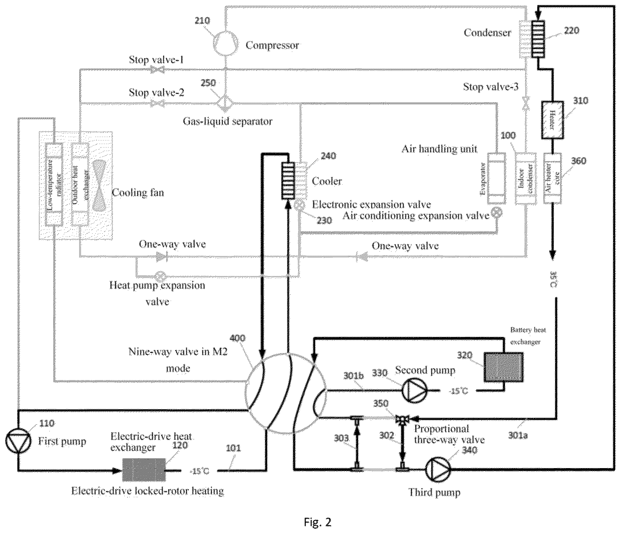

As shown in Figs. 2-5, when the battery needs to be heated, at a moment that the ambient temperature is less than a certain temperature value, for example, less than -15°C, the thermal management system starts the electric-drive heat exchange system and the inner circulation loop 301b and the outer circulation loop 301a first. In this case, since the temperature of the outer circulation loop 301a is relatively low, the inner circulation loop and the outer circulation loop 301a operate separately at the beginning, and heat exchange is not performed. When the heat generated by the electric-drive locked-rotor (heat is exchanged from the electric-drive assembly by the electric-drive heat exchanger 120) is exchanged out to raise the temperature of the first loop 101, the heater 310 on the outer circulation loop 301a is also activated to operate. The temperature of the outer circulation loop 301a starts to rise. When a temperature of the first loop 101 of the electric-drive heat exchange system is greater than -15°C (for example, - 13°C), the outer circulation loop 301a also has a certain temperature, for example, 35°C. The compressor 210 of the heat-pump heat exchange system is activated. In this case, the heat generated by the electric-drive locked-rotor of the first loop 101 is exchanged out by means of the cooler 240, and the third loop 301 is heated by the indirect condenser 220 to further increase the temperature of the outer circulation loop 301a. When the temperature reaches a certain value, for example, 50°C (in this case, the temperature of the inner circulation loop 301b is still the ambient temperature, for example, -15°C), the outer circulation loop 301a is in communication with the inner circulation loop 301b. Liquid (for example, water) at a relatively high temperature enters the inner circulation loop 301b from the outer circulation loop 301a to heat the battery. Then, the heater 310 and the compressor 210 of the heat-pump heat exchange system continue to operate to further increase the temperature of the outer circulation loop 301a and the temperature of the inner circulation loop 301b. When the temperature of the outer circulation loop 301a reaches a certain temperature (55°C-70°C, for example, 63°C), and the temperature of the inner circulation loop 301b reaches a certain temperature (35°C-45°C, for example, 40°C), the entire thermal management system maintains stable operation. The above heating of the battery is performed by heating the battery at a larger subcooling temperature by the battery heat exchanger 320, which increases the heating efficiency of the battery.

It should be understood that the temperatures of the outer circulation loop 301a and the inner circulation loop 301b are controlled by adjusting the opening of the connection between the outer circulation loop 301a and the inner circulation loop 301b, power of the compressor 210, thermal efficiency of the conversion of electric-drive locked-rotor, etc., such that the temperatures of the inner circulation loop and the outer circulation loop 301a are kept within a stable temperature range.

The battery heat exchange system can be designed with any suitable structure, that is, the outer circulation loop 301a and the inner circulation loop 301b are in disconnectable communication with each other with any suitable structure, such that on one hand, separate circulation can be implemented, and on the other hand, liquid exchange of the two circulation loops can be implemented. In some examples, the battery heat exchange system further includes a proportional three-way valve 350. The third loop 301 includes a liquid inlet passage connected to an outlet of the heater 310 and an inlet of the battery heat exchanger 320, a liquid return passage connected to an outlet of the battery heat exchanger 320 and an inlet of the heater 310, and a first passage 302 and a second passage 303 connected to the liquid inlet passage and the liquid return passage respectively and arranged in parallel. The proportional three-way valve 350 is arranged in a liquid inlet passage between the heater 310 and the second pump 330, one end of the first passage 302 is in communication with the liquid inlet passage through the proportional three-way valve 350, and the other end of the first passage is connected between the third pump 340 and the battery heat exchanger 320. One end of the second passage 303 is connected to a liquid inlet passage between the proportional three-way valve 350 and the second pump 330, and the other end of the second passage is connected to a liquid return passage between the third pump 340 and the battery heat exchanger 320. The heater 310, the proportional three-way valve 350, the first passage 302, the third pump 340 and the indirect condenser 220 form the outer circulation loop 301a. The second pump 330, the battery heat exchanger 320 and the second passage 303 form the inner circulation loop 301b.

Disconnection and communication of the outer circulation loop 301a and the inner circulation loop 301b are implemented by the proportional three-way valve 350. The proportional three-way valve 350 can adjust whether liquid in the liquid inlet passage enters the battery heat exchanger 320 or the amount of liquid entering the battery heat exchanger 320, so as to control the communication and disconnection of the inner circulation loop 301b and the outer circulation loop 301a and control the temperatures of the inner circulation loop 301b and the outer circulation loop 301a.

In order to heat a passenger compartment of a vehicle, in some examples, the thermal management system further includes an air heater core 360 connected to the third loop 301, an indoor condenser 260 connected to the second loop 201 and corresponding to the air heater core 360, and a fan 510. The fan 510 can blow air towards the air heater core 360 and the indoor condenser 260 for heating the passenger compartment.

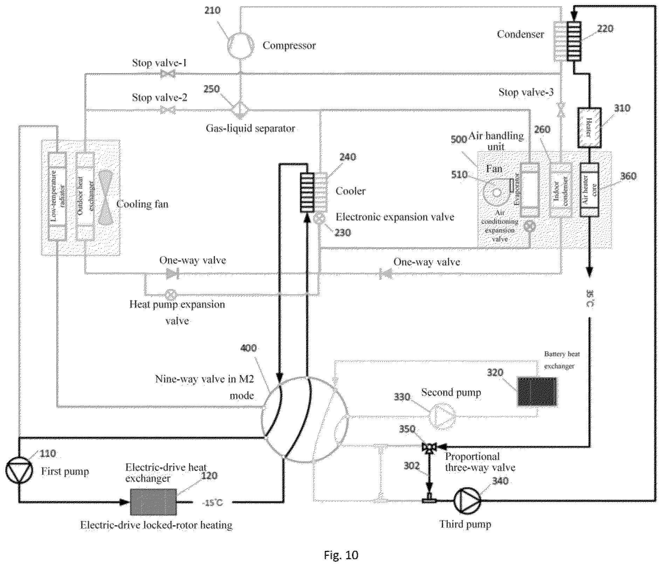

As shown in Figs. 10-13, when the passenger compartment needs to be heated, at a moment that the ambient temperature is less than or equal to a certain temperature value, for example, less than or equal to -10°C-15°C, the thermal management system firstly starts the electric-drive heat exchange system and starts the outer circulation loop 301a, specifically the heater 310 and the air heater core 360. The fan 510 also starts to work. Heat generated by the air heater core 360 is blown to the passenger compartment through the fan 510. The passenger compartment of the vehicle starts to be heated. Here, the inner circulation loop 301b is not in operation and performs no heat exchange.

In this case, when the heat generated by the electric-drive locked-rotor is exchanged out to raise the temperature of the first loop 101, the heater 310 on the outer circulation loop 301a is also activated to operate. The temperature of the outer circulation loop 301a starts to rise. When the temperature of the first loop 101 of the electric-drive heat exchange system is greater than - 15°C, for example, -13°C, the outer circulation loop 301a also has a certain temperature, for example, 35°C. The compressor 210 of the heat-pump heat exchange system and the indoor condenser 260 are activated. In this case, the fan 510 blows towards the indoor condenser 260 and the air heater core 360, and thus the heating efficiency of the passenger compartment is improved.

Moreover, the heat generated by the electric-drive locked-rotor of the first loop 101 is exchanged out by the cooler 240, and the third loop 301 is heated by the indirect condenser 220 to further increase the temperature of the outer circulation loop 301a. When the temperature gradually increases, a rotation speed of the compressor 210 of the heat-pump heat exchange system increases, heating power increases, and the temperature of the outer circulation loop 301a is further increased. When the temperature of the outer circulation loop 301a reaches a certain temperature (for example, 55°C-70°C), the entire thermal management system keeps stable operation. The passenger compartment is firstly heated by the air heater core 360 of the outer circulation loop 301a, and when the temperature of the first loop 101 is satisfied, the heat-pump heat exchange system is activated, and three-source heating is implemented through the electric-drive heat exchange system, the heat-pump heat exchange system and the battery heat exchange system, thus improving the heating efficiency of the passenger compartment.

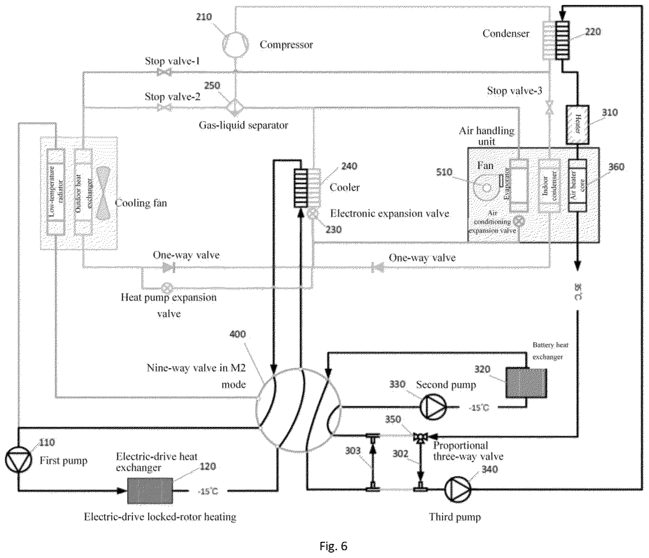

As shown in Figs. 6-9, when the battery and the passenger compartment both needs to be heated, at a moment that the ambient temperature is less than a certain temperature value, for example, less than -15°C, the thermal management system firstly starts the electric-drive heat exchange system, the inner circulation loop 301b and the outer circulation loop 301a, specifically the heater 310 and the air heater core 360. The fan 510 also starts to work. Heat generated by the air heater core 360 is blown to the passenger compartment through the fan 510. The passenger compartment of the vehicle starts to be heated. Here, the inner circulation loop 301b and the outer circulation loop 301a are operated independently and perform no heat exchange.

In this case, when the heat generated by the electric-drive locked-rotor is exchanged out to raise the temperature of the first loop 101, the heater 310 on the outer circulation loop 301a is also activated to operate. The temperature of the outer circulation loop 301a starts to rise. When the temperature of the first loop 101 of the electric-drive heat exchange system is greater than - 10°C to -15°C, for example, -13°C, the outer circulation loop 301a also has a certain temperature, for example, 35°C. The compressor 210 of the heat-pump heat exchange system and the indoor condenser 260 are activated. In this case, the fan 510 blows towards the indoor condenser 260 and the air heater core 360, thus further improving the heating efficiency of the passenger compartment.

Moreover, the heat generated by the electric-drive locked-rotor of the first loop 101 is exchanged out by the cooler 240, and the third loop 301 is heated by the indirect condenser 220 to further increase the temperature of the outer circulation loop 301a. When the temperature reaches a certain value, for example, 50°C (in this case, the temperature of the inner circulation loop 301b is still the ambient temperature, for example, -15°C), the outer circulation loop 301a is in communication with the inner circulation loop 301b (for example, by means of the proportional three-way valve 350). Liquid (for example, water) at a relatively high temperature enters the inner circulation loop 301b from the outer circulation loop 301a to heat the battery. Then, the heater 310 and the compressor 210 of the heat-pump heat exchange system continue to operate to further increase the temperature of the outer circulation loop 301a and the temperature of the inner circulation loop 301b. When the temperature of the outer circulation loop 301a reaches a certain temperature (for example, 55°C-70°C), and the temperature of the inner circulation loop 301b reaches a certain temperature (for example, 35°C-45°C), the entire thermal management system maintains stable operation. The battery is heated at a relatively high degree of supercooling by means of the battery heat exchanger 320, such that the heating efficiency of the battery is improved. Moreover, the passenger compartment is firstly heated by the air heater core 360 of the outer circulation loop 301a. When the temperature of the first loop 101 is satisfied, the heat-pump heat exchange system is activated, and three-source heating is implemented through the electric-drive heat exchange, the heat-pump heat exchange system and the battery heat exchange system, such that the heating efficiency of the passenger compartment is improved.

In order to measure the temperature of the liquid in each loop and facilitate control, in some examples, the first loop 101 is provided with a first temperature sensor configured to measure an outlet temperature of the electric-drive heat exchanger 120; and/or the third loop 301 is provided with a second temperature sensor configured to measure an outlet temperature of the heater 310; and/or the third loop 301 is provided with a third temperature sensor configured to measure an inlet temperature of the battery heat exchanger 320. The temperature of each loop is measured, and differential proportional integral (PI) control is implemented by a difference between a target temperature and an actual detected temperature, such that stable operation of the thermal management system with three-source heating is maintained.

In some examples, the electric-drive heat exchanger 120 is configured to perform differential PI control according to an actual temperature and a target temperature of the first loop 101; and/or the compressor 210 is configured to perform differential PI control according to an actual pressure and a target pressure of the second loop 201, and the electronic expansion valve 230 is configured to perform differential PI control according to an actual degree of supercooling and a target degree of supercooling of the second loop 201; and/or the heater 310 is configured to perform differential PI control according to an actual temperature and a target temperature of the third loop 301.

The target temperature is determined by a heat exchange capacity of the cooler 240 of the heat-pump heat exchange system under different working conditions, an electric-drive locked-rotor heat generation capacity and a continuous three-source heating capacity of the heater 310.

Control strategy of electric-drive heat exchange system: power of the electric-drive locked-rotor is subjected to differential PI control according to a target water temperature and an actual water temperature.

Control strategy of heat-pump heat exchange system: the heat-pump heat exchange system can be activated when an actual outlet water temperature of an electric drive is ≥ -10°C to -15°C (for example, -13°C), and an advantage of the gas-liquid separator 250 is used to rapidly increase the rotation speed of the compressor 210, to absorb heat generated by the electric drive. The compressor 210 is actually made to work quickly to supplement heat through a performance control method (reducing efficiency of the compressor 210), and PI control is carried out through a difference between a target high pressure and an actual high pressure. Differential PI control according to an actual degree of supercooling and a target degree of supercooling is used by the electronic expansion valve 230. For example, an inlet water temperature of the battery heat exchanger 320 is controlled to rise rapidly to 35°C-45°C.

Control strategy of battery heat exchange system: differential PI control according to a target water temperature and an actual water temperature is used by the heater 310. The proportional three-way valve 350 is controlled by the inner circulation loop 301b at an initial stage to rapidly increase the water temperature of the outer circulation loop 301a, such that the heater 310 and the heat-pump heat exchange system can output more performance more stably. When the actual water temperature is higher than 35°C, the proportional three-way valve 350 is controlled to distribute heat to the battery heat exchanger 320, to finally satisfy the target inlet water temperature of the battery heat exchanger 320 of 35°C-45°C, and to further maintain the temperature of the outer circulation loop 301a at about 55°C-70°C. When a temperature of the battery is low, a heat exchange capacity is too high. In a case that all the proportional three-way valves 350 are connected to the battery heat exchanger 320 in series, the water temperature of the outer circulation loop 301a in the initial stage is too low, a flow rate of the outer circulation loop 301a cannot reach 10 L/min, and the heater 310 cannot output full power. The water temperature of the outer circulation loop 301a is low, an exhaust high pressure of the heat-pump heat exchange system is low, and a heat absorption capacity can be guaranteed, but the compressor 210 cannot do more work (efficiency control), and balance of three heat sources cannot be satisfied.

Optionally, the thermal management system further includes a multi-way valve 400 connected to the first loop 101 and the third loop 301 separately. The multi-way valve 400 has a first mode and a second mode. In the first mode, the multi-way valve 400 is disconnected from the first loop 101 and the third loop 301, such that the electric-drive heat exchanger 120 is disconnected from the cooler 240, and the heater 310 is disconnected from the battery heat exchanger 320. In the second mode, the multi-way valve 400 is in communication with the first loop 101 and the third loop 301 separately, such that the electric-drive heat exchanger 120 is in communication with the cooler 240, and the heater 310 is in communication with the battery heat exchanger 320.

The multi-way valve 400 is connected to the first loop 101 and the third loop 301 separately, and is configured to implement communication and disconnection between the first loop 101 and the cooler 240, and communication and disconnection between the inner circulation loop 301b of the third loop 301 and the battery heat exchanger 320. In the first mode (that is, an M4 mode of the multi-way valve 400), the multi-way valve 400 is disconnected from the first loop 101 and the third loop 301, such that the electric-drive heat exchanger 120 is disconnected from the cooler 240, and the heater 310 is disconnected from the battery heat exchanger 320. In the second mode (that is, an M2 mode of the multi-way valve 400), the multi-way valve 400 is in communication with the first loop 101 and the third loop 301 separately, such that the electric-drive heat exchanger 120 is in communication with the cooler 240, and the heater 310 is in communication with the battery heat exchanger 320.

It should be noted that the multi-way valve 400 may be a nine-way valve.

The following specific examples illustrate heating of a battery, heating of a passenger compartment, and simultaneously heating of the battery and the passenger compartment in low temperature scenario.

### I. Rapid heating of battery in low temperature scenario

Definition of the low temperature scenario: ambient temperature ≤ -10°C, and battery minimum temperature ≤ -10°C
1) Electric-drive heat exchange system: the heat is generated by the electric-drive locked-rotor (from an electric drive system (EDS) pack), and the heat generated by the electric-drive locked-rotor is exchanged to the cooler 240 by means of operation of the first pump 110.
2) Heat-pump heat exchange system: the heat generated by the electric-drive locked-rotor and the heat generated by the compressor 210 power consumption are superimposed by means of the second loop 201 (the compressor 210 compresses a low-pressure and low-temperature gaseous refrigerant to form a high-temperature and high-pressure gaseous refrigerant, the heat is exchanged into the third loop 301 of the battery heat exchange system in the indirect condenser 220, and the refrigerant becomes a high-temperature and high-pressure liquid refrigerant, is throttled by the electronic expansion valve 230 of the cooler 240 to become a low-temperature and low-pressure gas-liquid two-phase refrigerant, absorbs heat in the cooler 240 to become a low-temperature and low-pressure gaseous refrigerant, and returns to the compressor 210), and are released to the third loop 301 of the battery heat exchange system by means of the indirect condenser 220.
3) The heat released by means of the indirect condenser 220 is circulated by the third pump 340 to be superimposed on heat generated by the heater 310, and released to the third loop 301 (outer circulation loop 301a).
4) A nine-way valve is in an M2 mode. All heat is controlled by the proportional three-way valve 350 to be released into the inner circulation loop 301b, and the temperature of the liquid in the outer circulation loop 301a is maintained to continue three-heat source heating.
5) Heat exchange is performed through the battery heat exchanger 320, so as to release heat to quickly heat the battery.

### II. Rapid heating of passenger compartment in low temperature scenario

An air conditioner in a passenger compartment is set to Auto HI, an ambient temperature is ≤ -15°C, and an internal temperature of the passenger compartment is ≤ -12°C.
1) Electric-drive heat exchange system: the heat is generated by the electric-drive locked-rotor (from the EDS pack), and the heat generated by the electric-drive locked-rotor is exchanged to the cooler 240 by means of operation of the first pump 110.
2) Heat-pump heat exchange system: the heat generated by the electric-drive locked-rotor and the heat generated by the compressor 210 power consumption are superimposed by means of a refrigeration cycle (the compressor 210 compresses a low-pressure and low-temperature gaseous refrigerant to form a high-temperature and high-pressure gaseous refrigerant, the heat is exchanged into the third loop 301 of the battery heat exchange system in the indirect condenser 220, and the refrigerant becomes a high-temperature and high-pressure gas-liquid two-phase refrigerant, enters an air conditioner internal cooling heat exchanger to be condensed into a high-temperature and high-pressure liquid refrigerant, is throttled by the electronic expansion valve 230 of the cooler 240 to become a low-temperature and low-pressure gas-liquid two-phase refrigerant, absorbs heat in the cooler 240 to become a low-temperature and low-pressure gaseous refrigerant, and returns to the compressor 210), and are released to the third loop 301 of the battery heat exchange system by condensation.
3) The heat released by condensation is circulated by the third pump 340 to be superimposed on heat generated by the heater 310, and released to the third loop 301 (outer circulation loop 301a). The heat is released by the air heater core 360.
4) A nine-way valve is controlled in an M4 mode. All heat is retained in the outer circulation loop 301a by means of control of the proportional three-way valve 350.
5) The air conditioner is activated, heat is exchanged between air and the indoor condenser 260 by the fan 510, and the air is heated.
6) Heat is exchanged between the heated air and the air heater core 360 again, to heat wind to a target temperature, and the heat is released to the passenger compartment through the air, such that a cockpit is heated rapidly.

### III. Rapid and simultaneous heating of passenger compartment and battery in low temperature scenario

Definition of the low temperature scenario: ambient temperature ≤ -10°C, battery minimum temperature ≤ -10°C, and the passenger compartment has a heating requirement.
1) Electric-drive heat exchange system: the heat is generated by the electric-drive locked-rotor (from the EDS pack), and the heat generated by the electric-drive locked-rotor is exchanged to the cooler 240 by means of operation of the first pump 110.
2) Heat-pump heat exchange system: the heat generated by the electric-drive locked-rotor and the heat generated by the compressor 210 power consumption are superimposed by means of a refrigeration cycle (the compressor 210 compresses a low-pressure and low-temperature gaseous refrigerant to form a high-temperature and high-pressure gaseous refrigerant, the heat is exchanged into the third loop 301 of the battery heat exchange system in the indirect condenser 220, and the refrigerant becomes a high-temperature and high-pressure gas-liquid two-phase refrigerant, enters an air conditioner internal cooling heat exchanger to be condensed into a high-temperature and high-pressure liquid refrigerant, is throttled by the electronic expansion valve 230 of the cooler 240 to become a low-temperature and low-pressure gas-liquid two-phase refrigerant, absorbs heat in the cooler 240 to become a low-temperature and low-pressure gaseous refrigerant, and returns to the compressor 210), and are released to the third loop 301 of the battery heat exchange system by means of the indirect condenser 220.
3) The heat released by means of the indirect condenser 220 is circulated by the third pump 340 to be superimposed on heat generated by the heater 310, and released to the third loop 301 (outer circulation loop 301a). The heat is released by the air heater core 360.
4) The nine-way valve is controlled in an M2 mode. Controlled by the proportional three-way valve 350, the heat is distributed to the passenger compartment and the battery according to demand, the water temperature of the outer circulation loop 301a is also maintained, and high performance output of the three heat sources is maintained.
5) The air conditioner is activated, heat is exchanged between air and the indoor condenser 260 by the fan 510, and the air is heated.
6) Heat is exchanged between the heated air and the air heater core 360 again, to heat wind to a target temperature, and the heat is released to the passenger compartment through the air, such that a cockpit is heated rapidly.
7) Heat exchange is performed through the battery heat exchanger 320, so as to release heat to quickly heat the battery.

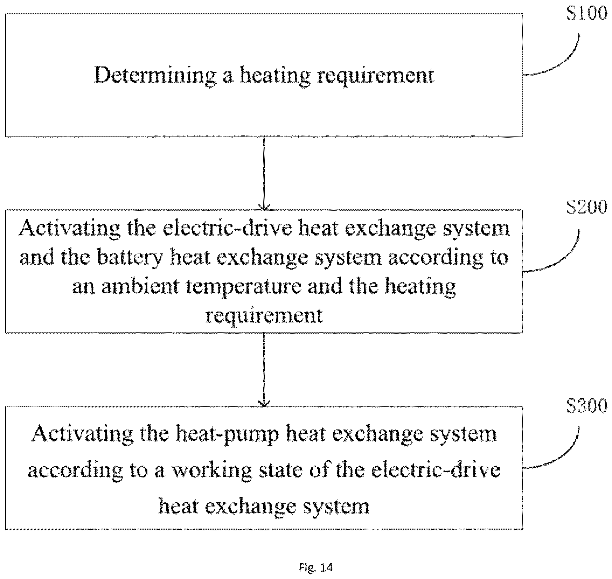

As shown in Fig. 14, the examples of the invention further provide a control method of a thermal management system. Based on the above thermal management system, the method includes S100-S300.

In S100, a heating requirement is determined. The heating requirement includes heating a battery, heating a passenger compartment, and simultaneously heating the battery and the passenger compartment.

In S200, an electric-drive heat exchange system and a battery heat exchange system are activated according to an ambient temperature and the heating requirement.

In S300, a heat-pump heat exchange system is activated according to a working state of the electric-drive heat exchange system.

According to the control method of the thermal management system disclosed by the invention, the electric-drive heat exchange system and the battery heat exchange system are activated by determining the heating requirement and the ambient temperature, and the heat-pump heat exchange system is activated according to the working state of the electric-drive heat exchange system, for example, when the temperature of the first loop 101 reaches a preset requirement, such that the battery is heated by three heat sources. That is to say, the battery is heated by superposing three heat sources from the electric-drive locked-rotor, the heat pump system and the heater 310, the heat can be released, the battery is heated rapidly, and heating efficiency is improved.

In another example, the electric-drive heat exchange system and the battery heat exchange system are activated according to an ambient temperature and the heating requirement, further includes:
activating an inner circulation loop 301b and an outer circulation loop 301a of the battery heat exchange system respectively; and
activating the heat-pump heat exchange system in response to determining that a temperature of the electric-drive heat exchange system is greater than a first preset temperature.

The third loop 301 includes the outer circulation loop 301a and the inner circulation loop 301b that are in disconnectable communication. When the battery needs to be heated, the inner circulation loop 301b and the outer circulation loop 301a are activated separately, and at this time, the two circulation loops operate independently and perform no heat exchange. When the temperature of the first loop 101 of the electric-drive heat exchange system is greater than the first preset temperature, the compressor 210 of the heat-pump heat exchange system is activated. The first preset temperature may be -10°C to -15°C, for example -15°C.

In some other examples, the electric-drive heat exchange system and the battery heat exchange system are activated according to an ambient temperature and the heating requirement, further includes:
activating the heat-pump heat exchange system in response to determining that a temperature of the outer circulation loop 301a of the battery heat exchange system reaches a second preset temperature.

A startup condition of the heat-pump heat exchange system further includes that when the temperature of the outer circulation loop 301a is greater than the second preset temperature, for example, the second preset temperature may be 30°C-40°C, for example, 35°C, that is to say, when the temperature of the electric-drive heat exchange system is greater than the first preset temperature, and the temperature of the outer circulation loop 301a is greater than the second preset temperature, the heat-pump heat exchange system is activated. The outer circulation loop 301a may be a preheating loop, and the inner circulation loop 301b may be used only for the flow of liquid in the battery heat exchanger 320. When an ambient temperature is low, both circulation loops can circulate separately, with the indirect condenser 220 and the heater 310 designed in the respective circulation loop. When the heater 310 in the circulation loop is activated, the outer circulation loop 301a may be heated to a preset temperature first. When a temperature of the outer circulation loop 301a reaches a target temperature, the outer circulation loop 301a may be in communication with the inner circulation loop 301b. In this case, the liquid in the outer circulation loop 301a may at least partially enter the inner circulation loop 301b, thus increasing a temperature of the liquid in the inner circulation loop 301b, to heat the battery through the battery heat exchanger 320.

In yet another example, when the temperature of the outer circulation loop 301a of the battery heat exchange system reaches a third preset temperature, the outer circulation loop 301a and the inner circulation loop 301b are in communication, and the battery is heated by the battery heat exchanger 320. The third preset temperature is greater than or equal to the second preset temperature.

The above method control may rapidly increase the temperature of the outer circulation loop 301a, such that the heater 310 and the heat-pump heat exchange system can output more performance more stably. When the actual water temperature is higher than 30°C-40°C, the proportional three-way valve 350 is controlled to distribute heat to the inner circulation loop 301b, to heat the battery and finally satisfy the target inlet water temperature of the battery, and to further maintain the temperature of the outer circulation loop 301a. When a temperature of the battery is low, a heat exchange capacity is too high. In a case that all the proportional three-way valves 350 are connected to the inner circulation loop 301b in series, the water temperature of the outer circulation loop 301a in the initial stage is too low, a flow rate of the outer circulation loop 301a cannot satisfy requirements, and the heater 310 cannot output full power. The water temperature of the outer circulation loop 301a is low, an exhaust high pressure of the heat-pump heat exchange system is low, and a heat absorption capacity can be guaranteed, but the compressor 210 cannot do more work (efficiency control), and balance of three heat sources cannot be satisfied.

Besides heating a battery, the method can also be used to heat a passenger compartment of a vehicle.

In yet another example, the electric-drive heat exchange system and the battery heat exchange system are activated according to an ambient temperature and the heating requirement, further includes:
activating an outer circulation loop 301a of the battery heat exchange system.
activating a fan 510 and an air heater core 360 to heat the passenger compartment.

Through the above method, only the electric-drive heat exchange system and the outer circulation loop 301a are controlled to be activated. On one hand, the heat from electric-drive locked-rotor is exchanged; and on the other hand, the heater 310 heats the liquid in the outer circulation loop 301a of the third loop 301 to heat the air heater core 360, and the fan 510 of an air conditioning system 500 is activated to blow the air heater core 360, so as to blow heat to the passenger compartment and heat the passenger compartment.

In still another example, the electric-drive heat exchange system and the battery heat exchange system are activated according to an ambient temperature and the heating requirement, further includes:
activating the heat-pump heat exchange system in response to determining that a temperature of the electric-drive heat exchange system is greater than a first preset temperature.

The first preset temperature may be 10°C to -15°C. In this case, the compressor 210 and the indoor condenser 260 of the heat-pump heat exchange system are activated. The fan 510 blows to the indoor condenser 260 and the air heater core 360 to heat the passenger compartment. The compressor 210 can be made to do work to quickly supplement heat through a performance control method (reducing the efficiency of the compressor 210), and differential PI control between the target high pressure and the actual high pressure is used. Differential PI control according to an actual degree of supercooling and a target degree of supercooling is used by the electronic expansion valve 230, so as to quickly raise an outlet air temperature to the target temperature.

Differential PI control according to a target water temperature and an actual water temperature can also be used by the heater 310, 8 kw is quickly output by a high version (the low version being 5 kw), the target water temperature is 63°C-80°C and up to 80°C, and a maximum flow rate of the third pump 340 is controlled.

It should be noted that the control method of a thermal management system can also implement simultaneous heating of a battery and a passenger compartment, which is specifically described as follows.

The thermal management system and the control method of a thermal management system according to the examples of the invention are described in detail below through some specific examples.

### I. Three-heat-source battery heating achieves a continuous heating capacity ≥ 16 kw, single electric drive ≥ 12 kw (with reference to Figs. 2-5).

1) The heat is generated by the electric-drive locked-rotor (EDS pack), and the heat generated by the electric-drive locked-rotor is exchanged to the cooler 240 by means of operation of the first pump 110.

The locked-rotor heating power of a dual motor version≥ 5 kw, and the locked-rotor heating power of a single motor version≥ 3 kw.

Control strategy: a control objective of a temperature of a coolant at an outlet of the electric-drive heat exchanger 120 is:

| Ambient temperature (°C) | Target electric-drive outlet coolant temperature (°C) |
|---|---|
| -25 | -A1 |
| -20 | -A1 |
| -15 | A2 |
| -10 | A3 |
| -5 | A4 |

The target temperature is determined by a heat exchange capacity of the cooler 240 of the heat-pump heat exchange system under different working conditions, an electric-drive locked-rotor heat generation capacity and a continuous three-source heating capacity. Further, - A1 < A2 < A3 < A4.

Power of the electric-drive locked-rotor is subjected to differential PI control according to a target water temperature and an actual water temperature.

Control strategy of heat-pump heat exchange system: the heat-pump heat exchange system is activated when an actual outlet water temperature of an electric drive is ≥ -10°C to - 15°C, and an advantage of the gas-liquid separator 250 is used to rapidly increase the rotation speed of the compressor 210, to absorb heat generated by the electric drive. The compressor 210 is actually made to work quickly to supplement heat through a performance control method (reducing efficiency of the compressor 210), and PI control is carried out through a difference between a target high pressure and an actual high pressure. Differential PI control according to an actual degree of supercooling and a target degree of supercooling is used by the electronic expansion valve 230. An inlet water temperature of the battery is controlled to rise rapidly to 35°C-45°C.

Control strategy of battery heat exchange system: differential PI control according to a target water temperature and an actual water temperature can also be used by the heater 310, 8 kw is quickly output by a high version (the low version being 5 kw), the target water temperature is up to 55°C-70°C. A maximum flow rate of the third pump 340 is controlled.

The nine-way valve is controlled in an M2 mode. The proportional three-way valve 350 is controlled by the inner circulation loop 301b at an initial stage to rapidly increase the water temperature of the outer circulation loop 301a, such that the heater 310 and the heat-pump heat exchange system can output more performance more stably. When the actual water temperature is higher than 30°C-40°C (for example, 35°C), the proportional three-way valve 350 is controlled to distribute heat to the inner circulation loop 301b, to heat the battery and finally satisfy the target inlet water temperature of the battery being 35°C-45°C, and to further maintain the temperature of the outer circulation loop 301a at 55°C-70°C (for example, 63°C). When a temperature of the battery is low, a heat exchange capacity is too high. In a case that all the proportional three-way valves 350 are connected to the inner circulation loop 301b in series, the water temperature of the outer circulation loop 301a in the initial stage is too low, a flow rate of the outer circulation loop 301a cannot satisfy 10 L/min, and the heater 310 cannot output full power. The water temperature of the outer circulation loop 301a is low, an exhaust high pressure of the heat-pump heat exchange system is low, and a heat absorption capacity can be guaranteed, but the compressor 210 cannot do more work (efficiency control), and balance of three heat sources cannot be satisfied.

When the battery is heated, a target flow rate of the second pump 330 may be controlled to be 20 L/min.

Finally, continuous performance of three-heat-source battery heating is beyond 16 kw.

### II. Three-heat-source passenger compartment heating (with reference to Figs. 10-13)

Control strategy of an electric-drive locked-rotor: a control objective of a temperature of a coolant at an outlet of the electric-drive heat exchanger 120 is:

| Ambient temperature (°C) | Target electric-drive outlet coolant temperature (°C) |
|---|---|
| -25 | -A1 |
| -20 | -A1 |
| -15 | A2 |
| -10 | A3 |
| -5 | A4 |

The target temperature is determined by a heat exchange capacity of the cooler 240 of the heat-pump system under different working conditions, an electric-drive locked-rotor heat generation capacity and a continuous three-source heating capacity. Further, -A1 < A2 < A3 < A4.

Power of an electric-drive locked-rotor is subjected to differential PI control according to a target water temperature and an actual water temperature.

Control strategy of heat-pump heat exchange system: the heat-pump heat exchange system is activated when an actual outlet water temperature of an electric drive is ≥ -10°C to - 15°C, and an advantage of the gas-liquid separator 250 is used to rapidly increase the rotation speed of the compressor 210, to absorb heat generated by the electric drive. The compressor 210 is actually made to work quickly to supplement heat through a performance control method (reducing efficiency of the compressor 210), and PI control is carried out through a difference between a target high pressure and an actual high pressure. Differential PI control according to an actual degree of supercooling and a target degree of supercooling is used by the electronic expansion valve 230. An outlet air temperature is quick raised to 55°C-70°C.

Control strategy of battery heat exchange system: differential PI control according to a target water temperature and an actual water temperature can also be used by the heater 310, 10 kw is quickly output by a high version (the low version being 7 kw), and the target water temperature is 63°C-80°C and up to 80°C. A maximum flow rate of the third pump 340 is controlled.

The nine-way valve is controlled in an M4 mode. inner circulation (100% position) is achieved by controlling of the proportional three-way valve 350.

The fan 510 of the air conditioner operates at maximum power. Internal and outer circulation automatic anti-fog control is implemented. An air conditioning mode is blowing window and feet. A temperature damper is fully heated to rapidly make air outlet temperature up to 55°C-70°C. The temperature is maintained. Thus, a heating rate of the passenger compartment is 3 K/min-5 K/min, and the passenger compartment reaches a comfortable temperature about 10 min.

### III. Three-heat-source simultaneous heating of passenger compartment and battery (passenger compartment is priority) (with reference to Figs. 6-9)

Control strategy of an electric-drive locked-rotor: a control objective of a temperature of a coolant at an outlet of the electric-drive heat exchanger 120 is:

| Ambient temperature (°C) | Target electric-drive outlet coolant temperature (°C) |
|---|---|
| -25 | -A 1 |
| -20 | -A1 |
| -15 | A2 |
| -10 | A3 |
| -5 | A4 |

The target temperature is determined by a heat exchange capacity of the cooler 240 of the heat-pump system under different working conditions, an electric-drive locked-rotor heat generation capacity and a continuous three-source heating capacity. Further, -A1 < A2 < A3 < A4.

Power of an electric-drive locked-rotor is subjected to differential PI control according to a target water temperature and an actual water temperature.

Control strategy of heat-pump heat exchange system: the heat-pump heat exchange system is activated when an actual outlet water temperature of an electric drive is ≥ -10°C to - 15°C, and an advantage of the gas-liquid separator 250 is used to rapidly increase the rotation speed of the compressor 210, to absorb heat generated by the electric drive. The compressor 210 is actually made to work quickly to supplement heat through a performance control method (reducing efficiency of the compressor 210), and PI control is carried out through a difference between a target high pressure and an actual high pressure. Differential PI control according to an actual degree of supercooling and a target degree of supercooling is used by the electronic expansion valve 230. An outlet air temperature is quick raised to 55°C-70°C.

Control strategy of battery heat exchange system: differential PI control according to a target water temperature and an actual water temperature can also be used by the heater 310, 8 kw is quickly output by a high version (the low version being 5 kw), the target water temperature is up to 55°C-70°C, and a maximum flow rate of the third pump 340 is controlled.

Control strategy of valve: the nine-way valve is controlled in M2 mode. The heat exchange quantity of the passenger compartment and the battery is controlled and adjusted through the proportional three-way valve 350. In a case that a target air temperature of the passenger compartment is ≥ 55°C, an air temperature of an air conditioner of the passenger compartment is controlled to be ≥ 55°C. Moreover, an inlet water temperature of the battery is controlled, and when performance is at the limit, the water temperature target is maintained at 55°C-70°C.

Control strategy of air handling system: the fan 510 of the air conditioner operates at maximum power. Internal and outer circulation automatic anti-fog control is implemented. An air conditioning mode is blowing windows and feet. A temperature damper is fully heated to rapidly make air outlet temperature reach 55°C or above.

Control strategy of second pump 330: when the battery is heated at Lev3, a target flow rate of an electric-drive water pump is controlled at 20 L/min.

The examples of the invention further provide a vehicle. The vehicle includes the thermal management system provided in the examples of the invention or the control method of a thermal management system provided in the examples of the invention. Thus, the vehicle also has all the advantages of the thermal management system and the control method of a thermal management system described above, and is not repeated here.

The preferred embodiments of the invention are described in detail above with reference to the drawings. However, the invention is not limited to specific details of the above embodiments. Within the scope of the technical concept of the invention, various simple modifications may be made to the technical solutions of the invention, and these simple modifications all fall within the scope of protection of the invention.

It should also be noted that various specific technical features described in the above specific embodiments may be combined in any suitable manner without contradiction. In order to avoid unnecessary repetition, the invention will not describe various possible combinations separately.

Moreover, various different embodiments of the invention may also be combined randomly, so long as various different embodiments of the invention do not deviate from the idea of the invention, and various different embodiments of the invention should also be regarded as contents disclosed in the invention.

## Claims

1. A thermal management system, comprising:
an electric-drive heat exchange system comprising a first loop (101), and a first pump (110) and
an electric-drive heat exchanger (120) that are arranged in the first loop (101);
a heat-pump heat exchange system comprising a second loop (201), and a compressor (210), an indirect condenser (220), an electronic expansion valve (230) and a cooler (240) that are sequentially arranged in the second loop (201), wherein the first loop (101) is connected to the cooler(240), the first loop (101) being configured to exchange heat with the second loop (201); and
a battery heat exchange system comprising a third loop (301), and a heater (310) and a battery heat exchanger (320) that are arranged in the third loop (301), wherein
the third loop (301) is connected to the indirect condenser (220), the second loop (201) is configured to exchange heat with the third loop (301).

2. The thermal management system according to claim 1, wherein the third loop (301) comprises an outer circulation loop (301a) and an inner circulation loop (301b) which are in disconnectable communication;
the battery heat exchanger (320) is arranged in the inner circulation loop (301b) and configured for heat exchange of a battery; and
the heater (310) and the indirect condenser (220) are arranged in the outer circulation loop (301a).

3. The thermal management system according to claim 2, wherein the battery heat exchange system comprises a second pump (330) arranged in the inner circulation loop (301b) and a third pump (340) arranged in the outer circulation loop (301a).

4. The thermal management system according to claim 3, wherein the battery heat exchange system further comprises a proportional three-way valve (350);
the third loop (301) comprises a liquid inlet passage connected to an outlet of the heater (310) and an inlet of the battery heat exchanger (320), a liquid return passage connected to an outlet of the battery heat exchanger (320) and an inlet of the heater (310), and a first passage (302) and a second passage (303) connected to the liquid inlet passage and the liquid return passage respectively and arranged in parallel;
the proportional three-way valve (350) is arranged in the liquid inlet passage between the heater (310) and the second pump (330), one end of the first passage (302) is in communication with the liquid inlet passage through the proportional three-way valve (350), and the other end of the first passage (302) is connected between the third pump (340) and the battery heat exchanger (320);
one end of the second passage (303) is connected to the liquid inlet passage between the proportional three-way valve (350) and the second pump (330), and the other end of the second passage (303) is connected to the liquid return passage between the third pump (340) and the battery heat exchanger (320);
the heater (310), the proportional three-way valve (350), the first passage (320), the third pump (340) and the indirect condenser (220) form the outer circulation loop (301a); and
the second pump (330), the battery heat exchanger (320) and the second passage (303) form the inner circulation loop (301b).

5. The thermal management system according to any one of claims 1-4, further comprising an air heater core (350) connected to the third loop (301), an indoor condenser (260) connected to the second loop (201) and corresponding to the air heater core (350), and a fan (510), wherein the fan (510) is configured to blow air towards the air heater core (350) and the indoor condenser (260) to heat a passenger compartment.

6. The thermal management system according to any one of claims 1-5, wherein the first loop (101) is provided with a first temperature sensor configured to measure an outlet temperature of the electric-drive heat exchanger (120); and/or
the third loop (301) is provided with a second temperature sensor configured to measure an outlet temperature of the heater (310); and/or
the third loop (301) is provided with a third temperature sensor configured to measure an inlet temperature of the battery heat exchanger (320).

7. The thermal management system according to claim 6, wherein the electric-drive heat exchanger (120) is configured to perform differential PI control according to an actual temperature and a target temperature of the first loop (101); and/or the compressor (210) is configured to perform differential PI control according to an actual pressure and a target pressure of the second loop (201), and the electronic expansion valve (230) is configured to perform differential PI control according to an actual degree of supercooling and a target degree of supercooling of the second loop (201); and/or the heater (310) is configured to perform differential PI control according to an actual temperature and a target temperature of the third loop (301).

8. The thermal management system according to any one of claims 1-7, further comprising a multi-way valve (400) connected to the first loop (101) and the third loop (301) separately, wherein the multi-way valve (400) has a first mode and a second mode;
in the first mode, the multi-way valve (400) is disconnected from the first loop (101) and the third loop (301), the electric-drive heat exchanger (120) is disconnected from the cooler (240), and the heater (310) is disconnected from the battery heat exchanger (320); and
in the second mode, the multi-way valve (400) is in communication with the first loop (101) and the third loop (301) separately, the electric-drive heat exchanger (120) is in communication with the cooler (240), and the heater (310) is in communication with the battery heat exchanger (320).

9. A control method of a thermal management system, based on the thermal management system according to any one of claims 1-8, comprising:
determining a heating requirement, wherein the heating requirement comprises heating a battery, heating a passenger compartment, and simultaneously heating the battery and the passenger compartment;
activating the electric-drive heat exchange system and the battery heat exchange system according to an ambient temperature and the heating requirement; and
activating the heat-pump heat exchange system according to a working state of the electric-drive heat exchange system.

10. The control method of a thermal management system according to claim 9, wherein activating the electric-drive heat exchange system and the battery heat exchange system according to an ambient temperature and the heating requirement further comprises:
activating an inner circulation loop (301b) and an outer circulation loop (301a) of the battery heat exchange system separately; and
activating the heat-pump heat exchange system in response to determining that a temperature of the electric-drive heat exchange system is greater than a first preset temperature.

11. The control method of a thermal management system according to claim 10, wherein activating the electric-drive heat exchange system and the battery heat exchange system according to an ambient temperature and the heating requirement further comprises:
activating the heat-pump heat exchange system in response to determining that a temperature of the outer circulation loop of the battery heat exchange system reaches a second preset temperature.

12. The control method of a thermal management system according to claim 11, wherein, in response to determining that the temperature of the outer circulation loop (301a) of the battery heat exchange system reaches a third preset temperature, the outer circulation loop (301a) and the inner circulation loop (301b) are in communication, the battery is heated by the battery heat exchanger (320), and
the third preset temperature is greater than or equal to the second preset temperature.

13. The control method of a thermal management system according to any one of claims 9-12, wherein activating the electric-drive heat exchange system and the battery heat exchange system according to an ambient temperature and the heating requirement further comprises:
activating an outer circulation loop (301a) of the battery heat exchange system; and
activating a fan (510) and an air heater core (360), and heating the passenger compartment.

14. The control method of a thermal management system according to claim 13, wherein activating the electric-drive heat exchange system and the battery heat exchange system according to an ambient temperature and the heating requirement further comprises:
activating the heat-pump heat exchange system in response to determining that a temperature of the electric-drive heat exchange system is greater than a first preset temperature.

15. A vehicle comprising the thermal management system according to any one of claims 1-8 or the control method of a thermal management system according to any one of claims 9-14.
